# EUROPÄISCHE PATENTSCHRIFT

(11) **EP 1 110 300 B1**
(45) Veröffentlichungstag und Bekanntmachung des Hinweises auf die Patenterteilung: **03.07.2002**
(21) Anmeldenummer: 99953634.5
(22) Anmeldetag: 31.08.1999
(51) Int. Cl.: H02M 3/07

(54) **ENERGIEVERSORGUNGSEINRICHTUNG UND SCHALTUNGSANORDNUNG MIT DIESER ENERGIEVERSORGUNGSEINRICHTUNG**
POWER SUPPLY DEVICE AND CIRCUIT ASSOCIATED WITH SAID POWER SUPPLY DEVICE
DISPOSITIF D'ALIMENTATION EN COURANT ET CIRCUIT ASSOCIE A CE DISPOSITIF

(30) Priorität: 31.08.1998 DE 19839643
(43) Veröffentlichungstag der Anmeldung: 27.06.2001
(73) Patentinhaber: Infineon Technologies AG, 81669 München (DE)
(72) Erfinder: REINER, Robert, D-85579 Neubiberg (DE); SMOLA, Michael, D-80636 München (DE); PALM, Herbert, D-85635 Höhenkirchen (DE)
(74) Vertreter: Hermann, Uwe, Dipl.-Ing.
(86) Internationale Anmeldenummer: DE9902717
(87) Internationale Veröffentlichungsnummer: WO0013300

(56) Entgegenhaltungen:
- EP-A- 0 386 261
- EP-A- 0 818 875
- US-A- 5 278 489
- PATENT ABSTRACTS OF JAPAN vol. 010, no. 367 (E-462), 9. Dezember 1986 (1986-12-09) & JP 61 161967 A (NEC CORP), 22. Juli 1986 (1986-07-22)

## Beschreibung

Die Erfindung betrifft eine Energieversorgungseinrichtung beziehungsweise eine Schaltungsanordnung mit dieser Energieversorgungseinrichtung.

Aus den japanischen Patent Abstacts JP 61161967 ist eine Energieversorgungseinrichtung mit einem Energiezwischenspeicher (CZ;LZ), einem Energiehauptspeicher (C) und einer Schalteinrichtung (S), wobei die Schalteinrichtung (S) mindestens zwei Schaltzustände ausweist, wobei in einem ersten Schaltzustand der Energiezwischenspeicher auf (CZ;L), an einen Energieversorgungseingang (E) angeschlossen ist und in einem zweiten Schaltzustand mit dem Energiehauptspeicher (C) verbunden ist, der-mit einem Energieversorgungsausgang (A) verbunden ist. Gleiches gilt für die EP 0818875A2. Aus der EP 0386261 A1 ist eine ähnliche Anordnung bekannt, wobei das Umschalten des Energiezwischenspeichers mittels zweier Schalteinrichtungen erfolgt, die wechselseitig Ein-bzw. Ausgang des Energiezwischenspeichers ansteuern. Aus der US 5,278,489 ist weiterhin eine Anordnung zum Steuern einer Schalteinrichtung in einer Energieversorgungseinrichtung beschrieben.

Es besteht zunehmend Bedarf, Datenverarbeitungsschaltung mit sicheren Energieversorgungen zu versehen. Dieser Bedarf kommt daher, daß es in der Datenverarbeitungstechnik zunehmend notwendig ist zu überprüfen, ob eine Datenverarbeitungsschaltung betrieben werden darf oder nicht. Entsprechend der hiermit einhergehenden Identifizierung beziehungsweise Authentifizierung und der Überprüfung, ob der Betrieb zugelassen ist oder nicht, wird verstärkt versucht derartige Maßnahmen zu umgehen. Eine Möglichkeit unerlaubt an Operationen beziehungsweise Daten in einer Datenverarbeitungseinrichtung zu gelangen, ist die Möglichkeit, während eines zulässigen Betriebes die Änderungen Energieverbrauch der Datenverarbeitungseinrichtung zu erfassen. Aus diesen Änderungen wird dann auf bestimmte Vorgänge beziehungsweise Daten ein Zugriff erlangt, der an und für sich nicht zugelassen ist.

Demgemäß liegt der Erfindung die Aufgabe zugrunde, eine Energieversorgungseinrichtung vorzusehen, beziehungsweise eine Schaltungsanordnung mit einer Datenverarbeitungseinrichtung, bei der aus der Überwachung des Energieverbrauchs nicht auf Vorgänge beziehungsweise Daten in der Datenverarbeitungseinrichtung zurück geschlossen werden kann.

Diese Aufgabe wird erfindungsgemäß durch die in den Patentansprüchen 1 beziehungsweise 5 angegebenen Maßnahmen gelöst. Durch das Abkoppeln des aufgeladenen Energiezwischenspeichers vom Energieversorgungseingang, dem Umladen auf den Energiehauptspeicher ist der am Energieversorgungseingang zu beobachtende Energieverbrauch unabhängig vom Augenblickswert des Energieverbrauchs, der am Energieversorgungsausgang zu beobachten ist, beziehungsweise der durch die Datenverarbeitungseinrichtung verursacht ist, da der Energiezwischenspeicher nach dem Umlachen auf den Energiehauptspeicher mit einer Energieentladeanordnung verbunden wird.

Weitere vorteilhafte Ausgestaltungen der Erfindung sind in den Ansprüchen angegeben.

Die angegebenen Maßnahmen dienen dabei ebenfalls dem Unterdrücken eines Augenblickswertes des Energieverbrauchs am Energieversorgungsausgang beziehungsweise der Datenverarbeitungseinrichtung. Nachfolgend wird die Erfindung unter Bezugnahme auf die Zeichnung näher erläutert.

Es zeigen:
- Fig.1: ein erstes erfindungsgemäßes Ausführungsbeispiel,
- Fig.2: eine Weiterbildung des in Fig.1 dargestellten Ausführungsbeispiels,
- Fig.3: eine weitere Ausgestaltung des in Fig.1 dargestellten erfindungsgemäßen Ausführungsbeispiels und
- Fig.4: ein zweites Ausführungsbeispiel.

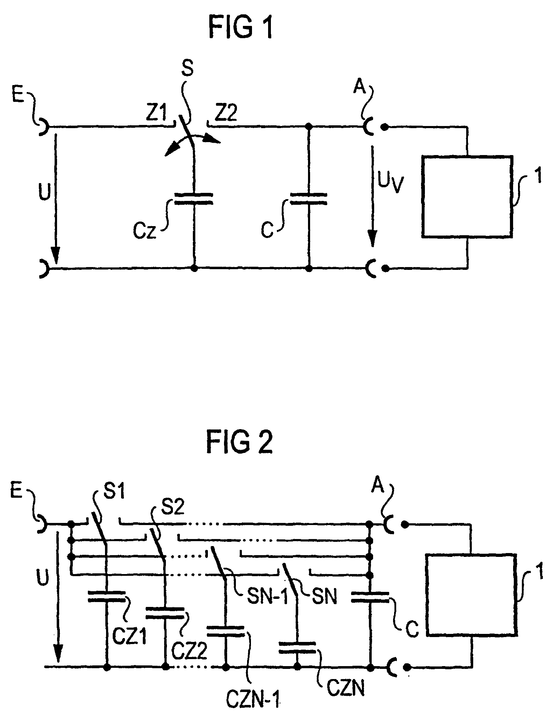

Fig.1 zeigt ein erstes erfindungsgemäßes Ausführungsbeispiel. Hierbei ist dargestellt, daß an einem Eingang E eine Spannung U anliegt, die einem Schalter S zugeführt wird, wenn dieser Schalter S einen ersten Schaltzustand Z1 einnimmt. Weiterhin wird in diesem Schaltzustand die Spannung einem Kondensator CZ zugeführt. Dabei wird der Kondensator CZ auf den Wert der am Eingang E anliegenden Spannung U aufgeladen. Nimmt der Schalter S den zweiten Zustand Z2 ein, so ist der Kondensator CZ nicht mehr mit dem Eingang E verbunden, sondern mit einem Kondensator C, der wiederum vom Kondensator CZ aufgeladen wird. Am Ausgang A liegt die am Kondensator C anliegende Spannung UV an, die als Versorgungsspannung für eine ebenfalls am Knoten A verbundene Datenverarbeitungseinrichtung 1 dient. Durch den Betrieb der Datenverarbeitungseinrichtung 1 dient. Durch den Betrieb der Datenverarbeitungseinrichtung 1 wiederum wird Energie verbraucht, so daß der Kondensator C entladen wird. Somit ist notwendig, daß der Schalter S wiederum in den Zustand Z1 zurück wechselt, so daß der Kondensator CZ neu aufgeladen wird und wiederum nach einem Zurückwechseln des Schalters S in den Zustand Z2 den Kondensator C neu auflädt.

Die Datenverarbeitungseinrichtung 1 wiederum soll mit einer Taktrate T betrieben werden. Ist nunmehr die Umschaltfrequenz, die verwendet wird um den Kondensator C immer wieder neu aufzuladen, kleiner als die doppelte Taktrate T, so kann aus dem Ladestrom, der den Kondensator CZ auflädt nicht auf den Strom zurück geschlossen werden, mit dem die Datenverarbeitungseinrichtung 1 aus dem Kondensator C betrieben wird.

Bei einem einfachen Tiefpaß-Filter werden die hohen Frequenzen bedämpft und somit wird ein Rückschluß auf die Funktion erschwert, aber durch entsprechende Verstärkung kann der tatsächliche Stromverlauf wieder sichtbar gemacht werden.

Die Ausbildung als Abtastfilter ermöglicht es nun, mit einer Umschaltfrequenz (Abtastfrequenz), die unterhalb der doppelten Taktfrequenz der Schaltung liegt, das Abtasttheorem bewußt zu verletzen und damit die Rekonstruktion des ursprünglichen Stromverlaufs wesentlich zu erschweren. Die gewünschte Verfälschung ist umso stärker, je niedriger die Umschaltfrequenz im Verhältnis zur Taktfrequenz liegt.

Durch die zeitliche Variation der Umschaltfrequenz kann die Rekonstruktion weiter erschwert werden.

Fig.2 zeigt eine Weiterbildung des in Fig. dargestellten Ausführungsbeispiels. Hierbei sind gleiche beziehungsweise vergleichbare Elemente mit gleichen Bezugszeichen dargestellt. Bei dieser Weiterbildung sind eine Vielzahl, das bedeutet N, Kondensatoren Z1 bis ZN vorgesehen, die über jeweilige Schalter S1 bis SN aus dem Spannungseingang mit der Spannung U aufgeladen werden. Nunmehr ist vorgesehen, entweder die Kondensatoren gleichzeitig mit der Eingangsspannung U aufzuladen um danach nacheinander parallel zum Kondensator C geschaltet zu werden. Dadurch wird die Spannungswelligkeit am Kondensator C verringert, ohne daß mehr Information an den Eingang E übertragen wird. Eine weitere Möglichkeit besteht darin, fortlaufend die Kondensatoren CZ1 bis CZN in komplexerer Reihenfolge mit dem Eingang E und mit dem Kondensator C zu verbinden. In beiden Fällen erfolgt eine Vergleichmäßigung beziehungsweise Glättung des aus der Eingangsspannung bezogenen Ladestromes. Weiterhin kann in beiden Fällen vorgesehen sein, daß für die Datenverarbeitungseinrichtung 1 die beschriebene Anordnung als Spannungsregler betrieben wird. In diesem Fall wird die Umtaktrate T in Abhängigkeit vom Stromverbrauch, das heißt von der Versorgungsspannung UV geregelt.

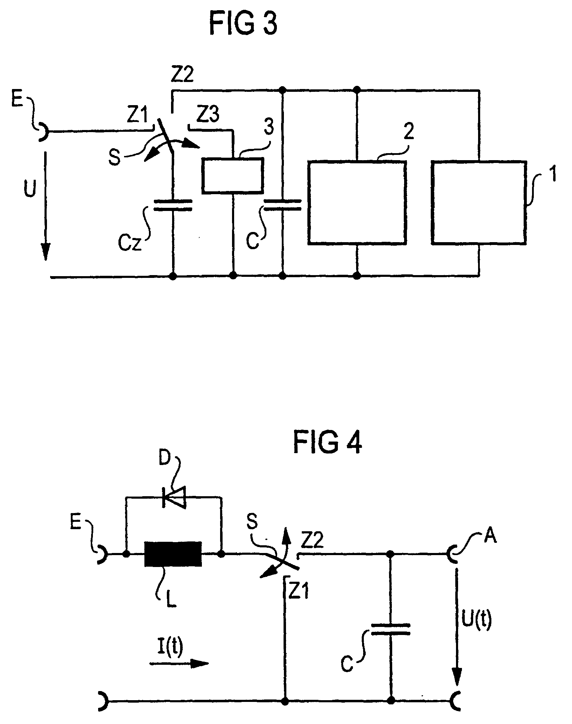

In Fig.3 ist eine weitere Weiterbildung des in Fig.1 dargestellten Ausführungsbeispiels dargestellt. Bei dieser Weiterbildung weist der Schalter S einen dritten Zustand Z3 auf. Weiterhin ist parallel zum Kondensator C und der Datenverarbeitungseinrichtung 1 ein Parallelspannungsregler 2 vorgesehen. Der Unterschied im Betrieb, wie er in Fig. 3 dargestellt ist, zu der in Fig.1 dargestellten Anordnung, liegt darin, daß nach dem Umladen der auf dem Kondensator CZ gespeicherten Ladung auf den Kondensator C, der Schalter S den Zustand Z3 einnimmt. In dieser Stellung ist der Kondensator parallel zu einer Entladeschaltung 3 geschaltet. Diese Entladeschaltung 3 entlädt nunmehr den Kondensator CZ auf einen vorbestimmten Wert. Anschließend schaltet der Schalter S wieder in den Zustand Z1 um, so daß der Kondensator CZ mit dem Eingang E verbunden ist, so daß er von der Eingangsspannung U erneut aufgeladen wird. Auf diese Weise weist der Kondensator CZ vor dem neuen Aufladen einen vorbestimmten Zustand auf, so daß er immer mit dem gleichen Ladestrom aus der Eingangsspannung U heraus aufgeladen wird. Alle drei Ausgestaltungen des ersten erfindungsgemäßen Ausführungsbeispiels sind dazu geeignet als integrierte Schaltung auf einem Halbleiterchip ausgebildet zu werden. Dabei wird z.B. bei einer Datenverarbeitungseinrichtung, die eine Versorgungsspannung von zwei Volt benötigt und mit einer mittleren Verlustleistung von 2mW Watt betrieben, bei einer Schaltfrequenz von 1 MHz eine Eingangsspannung von 3 Volt, für den Kondensator CZ eine Kapazität von 1 nF benötigt. Dabei wird ein Strom von 1 mA übertragen. Der Schalter S ist in einem solchen Fall durch einen elektronischen üblichen Schalter ausgebildet. Die Schaltungsanordnung ist bevorzugt für integrierte Schaltungen, die mit einer ferroelektrische Dielektrika verwendenden Technologie hergestellt sind. In einem solchen Fall ist die Dielektrizitätskonstante E einsetzbar, gegenüber den bisher üblichen Dielektrizitätskonstanten erhöht, so daß in einem solchen Fall für eine vorgegebene Kapazität eine kleinere Fläche benötigt wird.

Fig.4 zeigt ein zweites Ausführungsbeispiel. Mit diesem Ausführungsbeispiel ist die Kapazität CZ gemäß Fig.1 bis 3 durch eine Induktivität ersetzt. Durch den Schalter. S, wird durch das Umschalten vom Zustand Z1 zum Zustand Z2 folgendes bewirkt. Im Zustand Z1 wird ein Strom I(T) in die Induktivität L eingeprägt, so daß sich ein Magnetfeld ausbildet. Dieses Magnetfeld entspricht einer durch diese Spule gespeicherte magnetische Energie. Wechselt der Schalter S vom Zustand Z1 in den Zustand Z2, so ist die Spule wiederum mit dem Kondensator C verbunden, der aus der in der Induktivität L gespeicherten magnetischen Energie heraus wiederum durch einen Ladestrom auf eine Spannung UV(T) aufgeladen wird. Um beim Umschalten von dem Zustand Z1 in den Zustand Z2 das Auftreten von Überspannungen zu verhindern, muß parallel zur Induktivität L eine sogenannte Freilaufdiode D vorgesehen sein. Sollte es nicht möglich sein, die Induktivität L mit auf dem Halbleiterchip zu integrieren, so kann sie zumindest direkt auf der Oberfläche des Halbleiterchip angeordnet sein. Die Weiterbildungen gemäß Fig.2 und Fig.3 sind entsprechend auf dieses zweite Ausführungsbeispiel übertragbar.

## Patentansprüche

1. Energieversorgungseinrichtung mit einem Energiezwischenspeicher (CZ;LZ), einem Energiehauptspeicher (C) und einer Schalteinrichtung (S), wobei die Schalteinrichtung (S) mindestens zwei Schaltzustände ausweist, wobei in einem ersten Schaltzustand der Energiezwischenspeicher auf (CZ;L), an einen Energieversorgungseingang (E) angeschlossen ist und in einem zweiten Schaltzustand mit dem Energiehauptspeicher (C) verbunden ist, der mit einem Energieversorgungsausgang (A) verbunden ist,
**dadurch gekennzeichnet,**
**daß** die Schalteinrichtung (S) nach dem zweiten Schaltzustand einen dritten Schaltzustand einnimmt, in dem eine Energieentladeanordnung mit dem Energiezwischenspeicher (CZ;L) verbunden ist.

2. Energieversorgungseinrichtung nach Anspruch 1, bei der mehrere Energiezwischenspeicher (CZ1, CZ2, ..., CZN-1,CZN) über jeweils zugeordnete Schalteinrichtung parallel zueinander mit dem Energieversorgungseingang (E) oder dem Energiehauptspeicher (C) verbindbar ist.

3. Energieversorgungseinrichtung nach Anspruch 2, wobei die mehreren Energiezwischenspeicher (CZ1, CZ2, .... CZN-1, CZN) zu vorbestimmten verschiedenen Zeitpunkten mit dem Energieversorgungseingang verbunden sind.

4. Energieversorgungsanordnung nach Anspruch 3, wobei die mehreren Energiezwischenspeicher (CZ1, CZ2, ..., CZN-1, CZN) gleichzeitig mit dem Energiehauptspeicher (C) verbunden sind.

5. Schaltungsanordnung mit einer Energieversorgungseinrichtung nach einem der vorhergehenden Ansprüche, und einer am Energieversorgungsausgang angeschlossenen Datenverarbeitungseinrichtung (1), wobei die Schaltungsanordnung auf einem Halbleiterchip integriert ausgebildet ist.

6. Schaltungsanordnung nach Anspruch 6, bei der die Schaltungseinrichtung (S) mit einer Frequenz betrieben wird, die kleiner/gleich als die maximale Betriebsfrequenz der Datenverarbeitungseinrichtung ist.

## Claims

1. Power supply device having a temporary energy store (CZ;LZ), a main energy store (C) and a switching device (S), with the switching device (S) having at least two switching states, with the temporary energy store at (CZ;L) being connected in a first switching state to a power supply input (E) and being connected in a second switching state to the main energy store (C), which is connected to a power supply output (A),
**characterized**
**in that**, after the second switching state, the switching device (S) assumes a third switching state in which an energy discharge arrangement is connected to the temporary energy store (CZ;L).

2. Power supply device according to Claim 1, in which a number of temporary energy stores (CZ1,CZ2, ..., CZN-1,CZN) can be connected via a respectively associated switching device in parallel with one another to the power supply input (E) or to the main energy store (C).

3. Power supply device according to Claim 2, with the number of temporary energy stores (CZ1, CZ2,..., CZN-1, CZN) being connected to the power supply input at different predetermined times.

4. Power supply arrangement according to Claim 3, with the number of temporary energy stores (CZ1, CZ2,...,CZN-1, CZN) being connected to the main energy store (C) at the same time.

5. Circuit arrangement having a power supply device according to one of the preceding claims, and having a data processing device (1) which is connected to the power supply output, with the circuit arrangement being integrated on a semiconductor chip.

6. Circuit arrangement according to Claim 6, in which the circuit [sic] device (S) is operated at the frequency which is less than or equal to the maximum operating frequency of the data processing device.

## Revendications

1. Dispositif d'alimentation en énergie comportant un accumulateur intermédiaire d'énergie (CZ ; LZ), un accumulateur principal d'énergie (C) et un dispositif commutateur (S), le dispositif commutateur (S) comportant au moins deux états de commutation tels que, dans un premier état de commutation, l'accumulateur intermédiaire d'énergie (CZ ; L) est raccordé à une entrée d'alimentation en énergie (E) et, dans un deuxième état de commutation, il est relié à l'accumulateur principal d'énergie (C) qui est relié à une sortie d'alimentation en énergie (A),
**caractérisé par le fait que** le dispositif commutateur (S) prend après le deuxième état de commutation un troisième état de commutation dans lequel un dispositif de déchargement d'énergie est relié à l'accumulateur intermédiaire d'énergie (CZ ; L).

2. Dispositif d'alimentation en énergie selon la revendication 1, dans lequel plusieurs accumulateurs intermédiaires d'énergie (CZ1, CZ2, ..., CZN-1, CZN) peuvent être reliés à chaque fois par l'intermédiaire d'un dispositif commutateur associé et parallèlement les uns aux autres à l'entrée d'alimentation en énergie (E) ou à l'accumulateur principal d'énergie (C).

3. Dispositif d'alimentation en énergie selon la revendication 2, dans lequel les accumulateurs intermédiaires d'énergie (CZ1, CZ2, ..., CZN-1, CZN) sont reliés à l'entrée d'alimentation en énergie à des instants différents prédéterminés.

4. Dispositif d'alimentation en énergie selon la revendication 3, dans lequel les accumulateurs intermédiaires d'énergie (CZ1, CZ2, ..., CZN-1, CZN) sont reliés en même temps à l'accumulateur principal d'énergie (C).

5. Circuit comportant un dispositif d'alimentation en énergie selon l'une des revendications précédentes et un dispositif de traitement de données (1) raccordé à la sortie d'alimentation en énergie, dans lequel le circuit est conçu intégré sur une puce à semi-conducteurs.

6. Circuit selon la revendication 5, dans lequel le dispositif commutateur (S) fonctionne avec une fréquence qui est inférieure/égale à la fréquence de fonctionnement maximale du dispositif de traitement de données.
